(19) Europäisches Patentamt
European Patent Office
Office européen des brevets

(11) **EP 2 192 672 A2**

(12) **EUROPÄISCHE PATENTANMELDUNG**

(43) Veröffentlichungstag:
**02.06.2010 Patentblatt 2010/22**

(21) Anmeldenummer: **09014655.6**

(22) Anmeldetag: **25.11.2009**

(51) Int Cl.:
*H02K 7/116* (2006.01)  *H02K 1/27* (2006.01)
*H02K 3/26* (2006.01)  *H02K 1/18* (2006.01)
*H02K 5/08* (2006.01)

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**
Benannte Erstreckungsstaaten:
**AL BA RS**

(30) Priorität: **01.12.2008   DE 202008016005 U**

(71) Anmelder:
• **Ortloff, Helene
  09112 Chemnitz (DE)**

• **Söhnergroup GmbH
  74193 Schwaigern (DE)**

(72) Erfinder: **Ortloff, Peter
  09112 Chemnitz (DE)**

(74) Vertreter: **Hoffmeister, Helmut
  Dr. Hoffmeister & Bischof, Patentanwalt und
  Rechtsanwalt, Partnerschaftsgesellschaft
  Goldstrasse 36
  48147 Münster (DE)**

(54) **Kunststoff-Getriebe-Elektro-Motor**

(57)   Antriebsvorrichtung mit einem Stator (21) mit wenigstens einer eisenlosen Feldspule (5), einem Rotor (22) mit wenigstens einem Magnetelement (26, 27) und einer Getriebeeinheit (4, 9, 10, 19), bei der die Feldspulen (5) des Stators (21) wenigstens teilweise in wenigstens einem Spulenringkörper (50) und die Magnetelemente (26, 27) des Rotors (22) in einem Außenring (2) und einem dazu beabstandeten Innenring (2') angeordnet sind,

die so gehalten sind, dass zwischen ihnen der Spulenringkörper (50) des Stators (21) angeordnet ist.

Auf einem Innenringflächenelement des Innenringes (2') ist wenigstens ein Nockenflachkörper mit einem Nockenflächenelement angeordnet. Ein Flextopf (4) mit einem Walkriemen mit Walkriemenzähnen, in dem ein Hauptzahnrad (10) angeordnet ist, ist als Getriebeeinheit vorgesehen.

**FIG. 2**

EP 2 192 672 A2

**Beschreibung**

Die Erfindung betrifft eine Antriebsvorrichtung mit wenigstens

- einem Stator mit wenigstens einer eisenlosen Feldspule,
- einem Rotor mit wenigstens einem Magnetelement und
- einer Getriebeeinheit.

Eine Antriebsvorrichtung der eingangs genannten Art ist aus der EP 14 03 155 A2 bekannt. Sie umfasst einen BPM-Motor (Brushless Permanent Magnet), bei dem es sich um einen elektrisch kommutierten, ohne Bürsten arbeitenden Elektromotor mit Permanentmagneten ohne Reluktanz handelt. Der Motor weist eine einfache Elektronik auf, die mit den Datenbussen (CAN-Datenbussen) des Fahrzeugs verbunden werden kann. Allerdings liegt eine Antriebswelle koaxial zur Motorwelle einer rotationssymmetrisch ausgeführten Motor- und Getriebeeinheit oder eine Symmetrieachse der Motor- und Getriebeeinheit in einer Spiegelebene. Das Getriebe ist ein herkömmliches Planetengetriebe.

Aus der EP 17 72 948 A2 (DE 10 2005 048 569 A1, DE 10 2005 048 570 A1) ist ein Motorgetriebe mit Torquemotor und Spannungswellgetriebe bekannt. Es weist einen Stator in der möglichen Bauform eines Torquemotors und einen Rotor als Getriebeelement auf. Der Rotor ist Teil eines Spannungswellgetriebes. Der Rotor ist im Innenteil des Motors ein mehrpoliger Magnetring mit einer Innenellipse oder ein Dreifach-Exzenter, der den flexiblen Zahntopf in das um einige Zähne kürzere Innenzahnrad drückt.

Ein elektrischer Nockenwellenversteller zur Verstellung und Fixierung der Phasenlage einer Nockenwelle eines Verbrennungsmotors gegenüber dessen Kurbelwelle ist aus der DE 10 2004 009 128 A1 bekannt. Hierbei ist mindestens eines der Räder der Hohlrad-Stirnradpaarung eines Wellengetriebes einteilig mit dem Antriebsrad oder Antriebsteil ausgebildet.

Aus der EP 18 95 640 A2 (EP 18 95 644 A2) ist eine elektrische Maschine mit einem Rotor und einem Stator bekannt. Die Maschine weist mit einer Steuereinheit verbundene eisenlose Feldspulen und mindestens einen Permanentmagnetring mit einem ringförmigen Luftspalt auf. Zumindest ein Teil der Steuereinheit ist unmittelbar an den Feldspulen angeordnet.

Aus der WO 2008 092 630 A2 ist ein Gleichstrommotor mit einem Rotor, der einen Magnetring mit wenigstens einem Magnetelement aufweist, und mit einem Stator bekannt, der wenigstens ein Statorwicklungselement mit Spulenelementen aufweist. Rotor und Stator sind gegeneinander bewegbar und durch wenigstens einen Luftspalt auf Abstand gehalten. Die Spulenelemente sind als Flachkörperspulen ausgeführt, die als Doppelspulenelemente ausgebildet sind. Ihre Enden sind dabei an ihrer Falzstelle miteinander verbunden. Die nebeneinander liegenden Flachkörperspulen sind mit einem Teil ihres Volumens in einem Statorkunststoffkörper eingebettet. Es sind zwei Arten von Magnetelementen vorhanden, nämlich in Radialrichtung Nord-Süd-gepolte und in Radialrichtung Süd-Nord-gepolte, die abwechselnd in Peripherierichtung des Magnetringes angeordnet sind.

Es stellt sich die Aufgabe, eine Antriebsvorrichtung der eingangs genannten Art so weiter zu entwickeln, dass die Teile einfacher herzustellen und zu montieren sind.

Erfindungsgemäß wird die Aufgabe dadurch gelöst,

- dass die eisenlosen Spulen des Stators wenigstens teilweise in wenigstens einem Spulenringkörper angeordnet sind,
- dass die Magnetelemente des Rotors wenigstens in einem Außenring und einem dazu beabstandeten Innenring angeordnet sind,
- dass Innen- und Außenring so gehalten sind, dass zwischen ihnen unter Belassung eines Luftspaltes der Spulenringkörper des Stators angeordnet ist,
- dass auf einem Innenringflächenelement des Innenringes wenigstens ein Nockenflachkörper mit einem Nockenflächenelement angeordnet ist,
- dass ein Flextopf mit einem Walkriemen mit Walkriemenzähnen, in dem ein Hauptzahnrad mit Zahnradzähnen angeordnet ist, als Getriebeeinheit vorgesehen ist,
- dass der Flextopf so in den Innenring des Rotors und in den Stator eingesetzt ist, dass der Walkriemen mit den Walkriemenzähnen auf den Zahnradzähnen des Hauptzahnrads angeordnet ist und mit seinem Walkriemenflächenelement wenigstens teilweise auf dem Nockenflachkörper aufliegt.

Die mit der Erfindung erzielten Vorteile bestehen insbesondere darin, dass Motor und Getriebe weitgehend aus Kunststoff hergestellt werden können. Hierdurch können alle Teile passgenau und vor allem in großer Stückzahl produziert werden. Alle Teile sind darüber hinaus nicht korrosionsanfällig und können damit in feuchter Umgebung eingesetzt werden. Dadurch, dass kein Bürstenfeuer entsteht, ist die Motorgetriebevorrichtung in explosionsgefährdeten Räumen einsetzbar. Der Motor, d. h. Stator und Rotor, sind topfförmig ausgebildet. Die Montage ist einfach, denn Stator, Rotor, Hauptzahnkranz und Flextopf brauchen nur zusammen gesteckt werden. Das aufwendige Zusammensetzen der einzelnen Zahnräder eines Getriebes entfallen. Der Walkriemen des Flextopfs bewegt sich "wankelmotorähnlich" an den Nockenflächenelementen vorbei, nimmt die Rotationsbewegung des Rotors als Deformationsenergie auf und überträgt sie auf das Hauptzahnrad. Da Kunststoff auf Kunststoff läuft, erübrigen sich Schmiermittel im herkömmlichen Sinn.

In den Unteransprüchen sind vorteilhafte Wei-

Wenigstens ein Spulenringkörper kann mit einer Grundplatte verbunden sein. Die Grundplatte kann jedwede geometrische Form haben. Z. B. kann sie dreieckig sein.

Die eisenlosen Feldspulen können in den Spulenringkörper eingespritzt werden. Hierdurch werden die Feldspulen zusammengehalten, zueinander angeordnet und gegen äußere Einflüsse geschützt.

Die eisenlosen Feldspulen können Wicklungen aufweisen, die gewickelt, gestanzt, gebogen oder dgl. hergestellt werden können. Welcher Herstellungsform der Vorzug gegeben wird, bestimmt insbesondere der Gesamtpreis. Die Wicklungen können aus Flachdraht, Runddraht, Profildraht oder einem Draht mit einem anderen geometrischen Querschnitt hergestellt werden. Das Querschnittsprofil bestimmt die Packungsdichte und die Festigkeit der eisenlosen Feldspulen.

Zusammen mit dem Spulenringkörper kann die Grundplatte geformt werden. Die Grundplatte kann jedwede geometrische Form haben. Sie kann rund, dreieckig, viereckig, sechseckig oder dgl. sein. Die Grundplatte kann ein Lagerelement mit einer Verbindungseinheit aufweisen. Die Verbindungseinheit kann aus Rastkörpern, Arretierkörpern oder dgl. bestehen.

In das Lagerelement kann der Flextopf eingesetzt werden. Die Rastkörper bzw. Arretierkörper sichern ein einfaches Montieren und einen festen Sitz des Flextopfs.

Die Magnetelemente können als Magnetring aus magnetisierbaren Materialien geformt und abwechselnd Süd-Nord- und Nord-Süd-gepolt aufmagnetisiert werden. Die Magnetelemente können alternierend von Magnetpaar zu Magnetpaar radial ausgerichtete Feldlinien zwischen den Magnetringen aufweisen.

Der Nockenflachkörper kann ein ebenes oder ein wenigstens teilweise gebogenes Nockenflächenelement aufweisen. Ein ebener Nockenflächenkörper führt dazu, dass der Flextopf wie eine Zahnstange seine Bewegung auf das Haptzahnrad überträgt. Es können für beide Teile einfach geformte Zähne zum Einsatz kommen. Ein teilweise gebogenes Nockenflächenelement führt dazu, dass der Flextopf wie ein Getriebe seine Bewegung überträgt, mit dem Erfordernis, dass die Zähne beider Teile wie Getriebezahnräder ausgebildet werden sollten.

Bei einem wenigstens teilweise gebogenen Nockenflachkörper kann ein Nockenkörperradius des Nockenflächenelements des Nockenflachkörpers drei bis sechsmal größer als ein Innenringradius des Innenringes sein. Vorzugsweise kann er ca. viermal größer sein. Hierdurch ist ein einwandfreies Abrollen des Flextopfes auf dem Nockenfächenelement gegeben.

Auf dem Innenringflächenelement des Innenrings sollten wenigstens drei Nockenflachkörper angeordnet sein. Die Nockenflachkörper können auf dem Innenringflächenelement des Innenrings gleichmäßig um den Mittelpunkt verteilt werden.

Bei drei Nockenflachkörpern können diese auf dem Innenringflächenelement des Innenrings in einem Abstandsinkel von 120° angeordnet sein. Hierdurch wird der Wankeleffekt bei der Walkbewegung erreicht. Der Flextopf kann sich dadurch trotz Stillstand wie ein Wankelmotorkolben im Inneren des Rotors bewegen.

Der Walkriemen des Flextopfs kann elastisch ausgebildet werden. Beim Abwalken am Rotor und Abdrehen am Hauptzahnrad kann der Walkriemen seine Form je nach Drehstellung verändern ohne zu zerbrechen.

Die Walkriemenzähne des Flextopfs können als Innenverzahnung ausgebildet werden; sie können dem Walkriemenflächenelement gegenüberliegend angeordnet sein.

Die Zahnradzähne des Hauptzahnrads können als Außenverzahnung ausgebildet sein.

Die Zahl der Zähne des Hauptzahnrad kann zur Zahl der Zähne des Walkriemens nach folgender Beziehung bestimmt werden:

$$k = n - (x \cdot m)$$

mit

- k Zahnradzähne,
- n Walkriemenzähne,
- m Anzahl der Nockenflächen.
- x Getriebeübersetzungsfaktor

Sind x = 1 und m = 3, so kann das Hauptzahnrad 99 Zahnradzähne und der Walkriemen 102 Walkriemenzähne aufweisen. Es können auch eine andere Anzahl von Zähnen zueinander gewählt werden, so dass unterschiedliche Über- bzw. Untersetzungen je nach Einsatzfall realisierbar sein können.

Die Spannungsabfälle der eisenlosen Feldspulen können je nach Position der Magnetelemente als Positionssignal ausgewertet werden. Hierdurch ist eine einfache und sichere Steuerung des Motors möglich.

Der Stator kann aus zwei Spulenringkörpern mit eisenlosen Feldspulen bestehen. Am Rotor können zwei der Innen- und der Außenringe so gehalten werden, dass zwischen ihnen unter Belassung innerer und äußerer Luftspalte die Spulenringkörper des Stators angeordnet sein können. Neben einer Verdopplung kann auch eine Verdreifachung, Vervierfachung oder eine andere Vervielfachung der Stator- und Rotorsysteme vorgenommen werden. Der Vorteil der Vervielfachung besteht in einer Leistungserhöhung der Antriebsvorrichtung.

Die Aufgabe wird bei einem Verfahren zur Herstellung einer Antriebsvorrichtung durch folgende Schritte gelöst:

A) Formen des Stators mit wenigstens einem Spulenringkörper, in den eisenlose Feldspulen eingespritzt werden;

B) Formen des Rotors mit zwei Magnetringen, die jeweils von einem Innen- und von einem Außenring umspritzt werden, wobei an ein Innenringflächenelement des Innenrings bei dessen Formung gleichmäßig über dessen Umfang versetzte Nockenflachkörper mit geformt werden;

C) Formen eines Flextopfs mit einem Walkriemen mit einer Innenverzahnung;

D) Formen eines Hauptzahnrads mit einer Außenverzahnung;

E) Aufsetzen des Rotors auf den Stator;

F) Einsetzen des Flextopfs in den Rotor und den Stator derart, dass der Walkriemen zwischen das eingesetzte Hauptzahnrad und wenigstens die Nockenflächenelemente geschoben wird.

Die hiermit verbundenen Vorteile bestehen insbesondere darin, dass Rotor, Stator und Getriebe abgesehen von den eisenlosen Feldspulen im wesentlichen aus einem Hauptwerkstoff, nämlich Kunststoff geformt werden können. Vor- und Nacharbeiten der einzelnen Kunststoffteile sind nicht erforderlich. Auch kann auf das sonst übliche feinmechanische Zusammenschrauben verzichtet werden. Vielmehr brauchen Rotor und Stator nur aufeinander gesetzt zu werden. Die Getriebeeinheit wird auch nicht Zahnrad für Zahnrad zusammen gesetzt. Vielmehr braucht nach dem Einsetzen des Flextopfs das Hauptzahnrad nur noch in den Flextopf geschoben werden, und die Getriebeeinheit ist nicht nur funktionsfähig, sondern der gesamte Motor und die gesamte Getriebeeinheit sind fertig montiert.

Die Magnetringe können im Zwei-Komponenten-Spritzverfahren in den Innen- und den Außenring gespritzt werden. Hierdurch werden die spröden Magnetringe insbesondere vor Beschädigungen geschützt.

Die magnetisierbaren Stoffe der Magnetringe können zu Magnetelementen aufmagnetisiert werden. Hierdurch lassen sich Abmessungen und Stärken der Magnetelemente individuell bestimmen.

Die eisenlosen Feldspulen können gewickelt, gebogen oder gestanzt werden. Welchem Verfahren für die Spulenherstellung der Vorzug gegeben wird, wird von den Kosten und den Einsatzbedingungen bestimmt.

Ein Ausführungsbeispiel der Erfindung ist nachfolgend in der Zeichnung dargestellt und im Folgenden näher beschrieben.

Es zeigen:

Fig. 1    einen Kunststoff-Getriebe-Motor in einer schematischen, perspektivischen Darstellung,

Fig. 2    einen Kunststoff-Getriebe-Motor gemäß Fig. 1 in einer auseinandergezogenen, schematischen, perspektivischen Darstellung,

Fig. 3    einen Kunststoff-Getriebe-Motor gemäß Fig. 1 in einer schematischen Schnittdarstellung,

Fig. 4    einen Flextopf eines Kunststoff-Getriebe-Motors gemäß Fig. 1 bis 3 in einer schematischen, perspektivischen Darstellung,

Fig. 5    eine eisenlose Feldspule eines Kunststoff-Getriebe-Motors gemäß Fig. 1 bis 4 in einer schematischen Seitenansicht,

Fig. 6    einen Ausschnitt aus einer Getriebeeinheit eines Kunststoff-Getriebe-Motors in einer schematischen Schnittdarstellung,

Fig. 7    einen weiteren Kunststoff-Getriebe-Motor in einer schematischen Schnittdarstellung,

Fig. 8    ein Blockschaltbild eines Steuerung für einen Kunststoff-Getriebe-Motor,

Fig. 9    einen Stator eines Kunststoff-Getriebe-Motors gemäß Fig. 1 bis 4 in einer schematisch dargestellten Draufsicht,

Fig. 10   einen Schnitt durch einen Stator gemäß Fig. 9 entlang der Linie X - X,

Fig. 11   eine schematisch dargestellte Rückansicht eines Stators gemäß Fig. 9,

Fig. 12   einen Schnitt durch einen Stator gemäß Fig. 9 entlang der Linie XII - XII,

Fig. 13   einen Stator gemäß Fig. 9 bis 12 in einer schematisch perspektivischen Darstellung seitwärts von unten gesehen,

Fig. 14   einen Stator gemäß Fig. 9 bis 12 in einer schematisch perspektivischen Darstellung seitwärts von oben gesehen,

Fig. 15   ein Hauptzahnrad eines Kunststoff-Getriebe-Motors gemäß Fig. 1 bis 4 in einer schematisch dargestellten Draufsicht,

Fig. 16   ein Hauptzahnrad gemäß Fig. 15 in einer schematisch dargestellten Seitenansicht,

Fig. 17   ein Hauptzahnrad gemäß Fig. 15 und 16 in einer schematisch perspektivischen Darstellung,

Fig. 18   einen Schnitt durch ein Hauptzahnrad gemäß Fig. 15 entlang der Linie XVIII - XVIII,

Fig. 19     eine Einzelheit B aus einem Hauptzahnrad gemäß Fig. 15,

Fig. 20     einen Rotor eines Kunststoff-Getriebe-Motors gemäß Fig. 1 bis 4 in einer schematisch dargestellten Draufsicht,

Fig. 21     einen Schnitt durch einen Rotor gemäß Fig. 21 entlang der Linie XXI - XXI,

Fig. 22     einen Rotor gemäß Fig. 20 und 21 in einer schematisch dargestellten Rückansicht,

Fig. 23     einen Rotor gemäß Fig. 20 bis 22 ohne Magnet-elemente in einer schematisch perspektivischen Darstellung,

Fig. 24     eine Einzelheit X aus einem Rotor gemäß Fig. 21,

Fig. 25     einen Flextopf eines Kunststoff-Getriebe-Motors gemäß Fig. 1 bis 4 in einer schematisch dargestellten Draufsicht,

Fig. 26     einen Flextopf gemäß Fig. 25 in einer schematisch dargestellten Seitenansicht,

Fig. 27     einen Flextopf gemäß Fig. 25 und 26 in einer schematisch dargestellten Rückansicht,

Fig. 28     einen Schnitt durch einen Flextopf gemäß Fig. 25 entlang der Linie XXVIII - XXVIII,

Fig. 29     ein Detail B aus einem Flextopf gemäß Fig. 25,

Fig. 30     einen Flextopf gemäß Fig. 25 bis 29 in einer schematisch perspektivischen Darstellung und

Fig. 31     einen Schnitt durch einen Flextopf gemäß Fig. 25 entlang der Linie XXXI - XXXI.

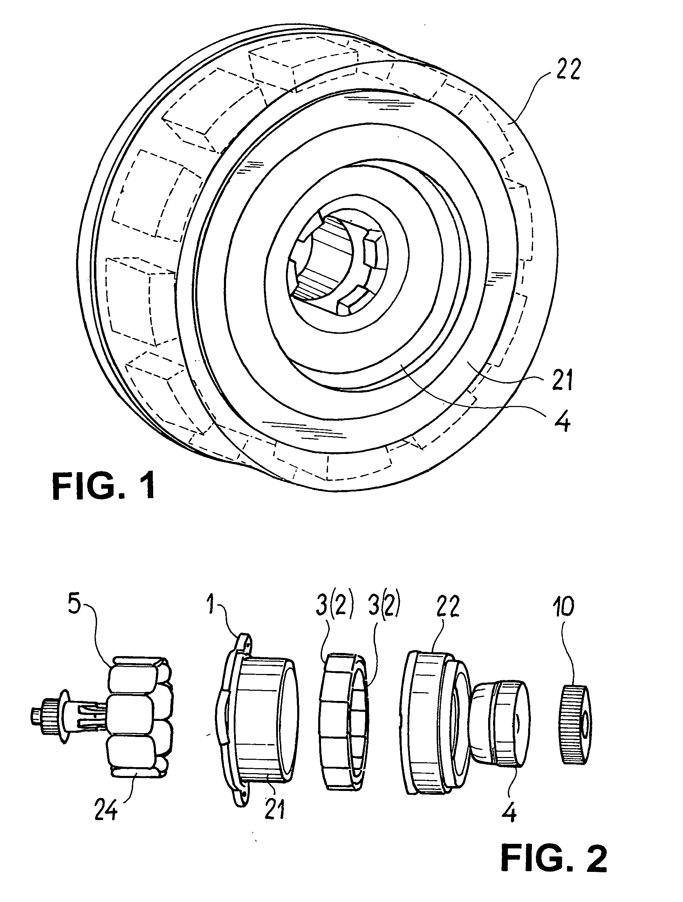

Ein Kunststoff-Getriebe-Motor gemäß Fig. 1 bis 4 umfasst einen Stator 21, einen Rotor 22, einen Flextopf 4 und ein Hauptzahnrad 10.

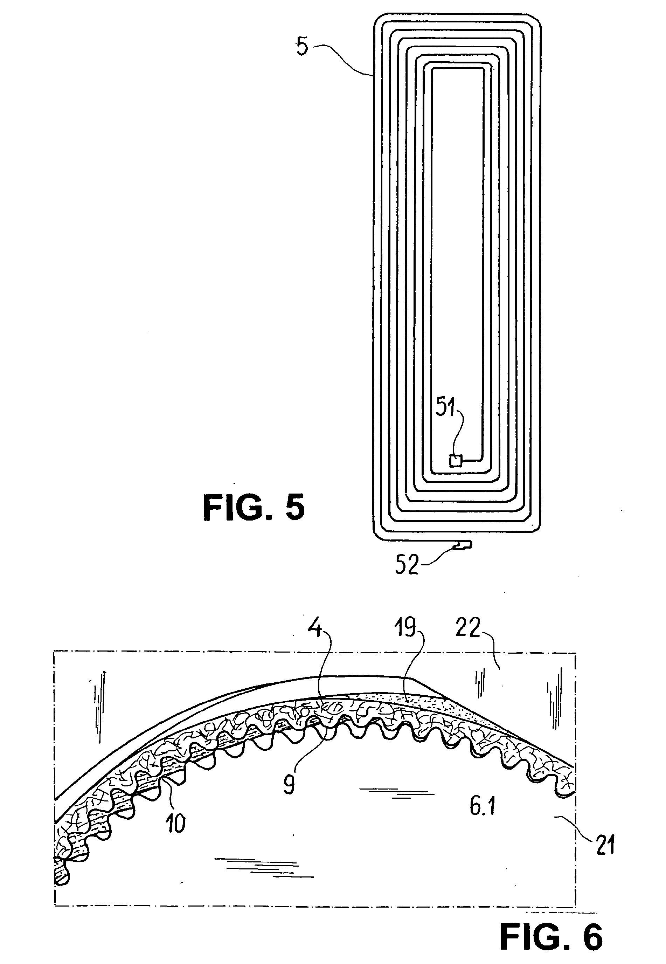

Für den Bau des Stators 21 werden eisenlose Feldspulen 5 gem. Fig. 5 verwendet, die zu Spulenpaketen zusammengefasst sind. Die Wicklung einer gestanzten Feldspule ist in Fig. 5 dargestellt. Andere Herstellungsverfahren sind möglich, z.B. durch Wickeln oder Biegen. Die Feldspulen 5 beginnen mit einem Spulenanfang 51 im Spuleninneren und enden mit einem Spulenende 52 am Spulenäußeren. Eine Isolation zwischen den einzelnen Spulendrähten sorgt nicht nur für eine einwandfreie Nutzung der Feldspulen, sondern ermöglicht auch eine gewisse mechanische Festigkeit.

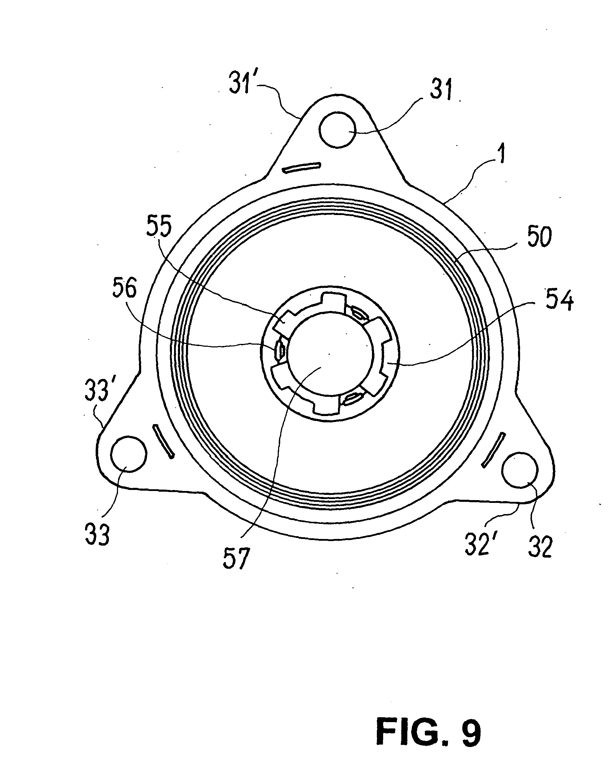

Zu Paketen zusammengefasste und -geschaltete Feldspulen 5 werden in einen Spulenringkörper 50 gem. Fig. 9 wenigstens teilweise eingeformt. Hierdurch werden die Feldspulen fest zusammen gepresst und vor äußeren Einflüssen geschützt.

Mit dem Spulenringkörper 50 wird gleichzeitig eine Grundplatte 1 mit einem Lagerelement 54 und Befestigungsausnehmungen 31, 32, 33 geformt. Die Befestigungsausnehmungen 31, 32, 33 sind gemäß Fig. 9 jeweils um 120° versetzt als Bohrungen in am kreisrunden Kern der Grundplatte vorstehende Laschen 31', 32', 33' eingebracht und ermöglichen ein Anschrauben an einer gewünschten Stelle.

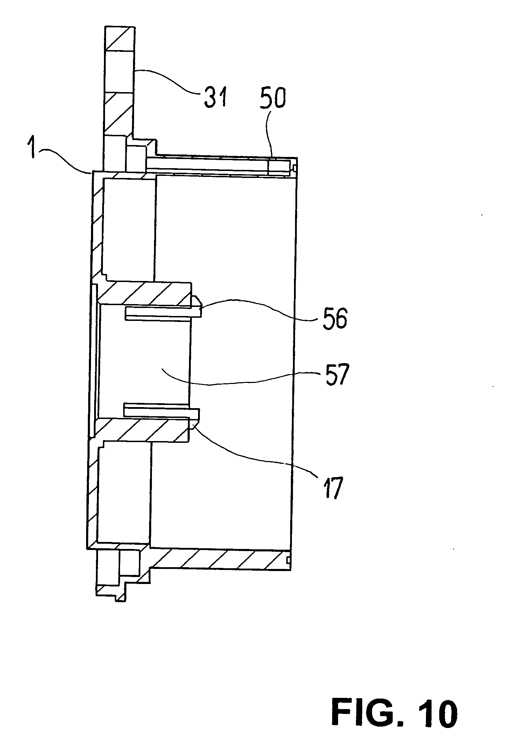

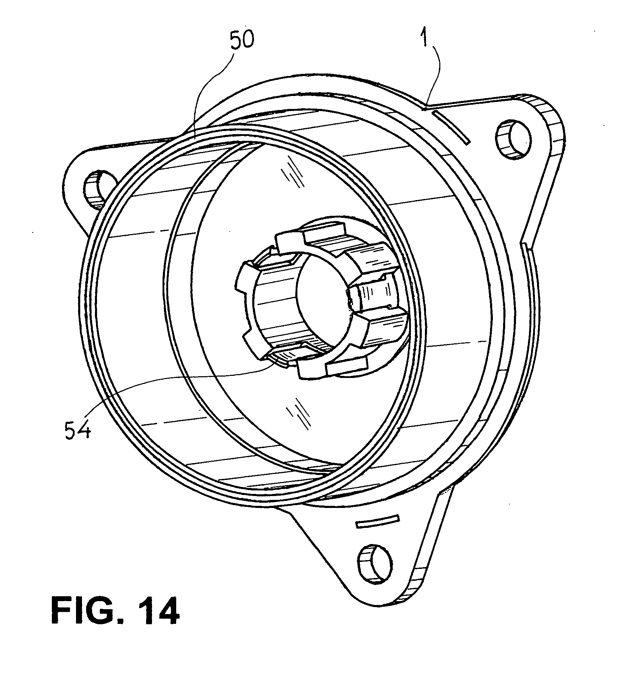

Das Lagerelement 54 weist, wie insbesondere Figuren 9, 10, 14 zeigen, beabstandet angeordnete Rastkörper 55 und gleichfalls beabstandet angeordnete Arretierkörper 56 auf, die sich alle um eine Achsausnehmung 57 gruppieren.

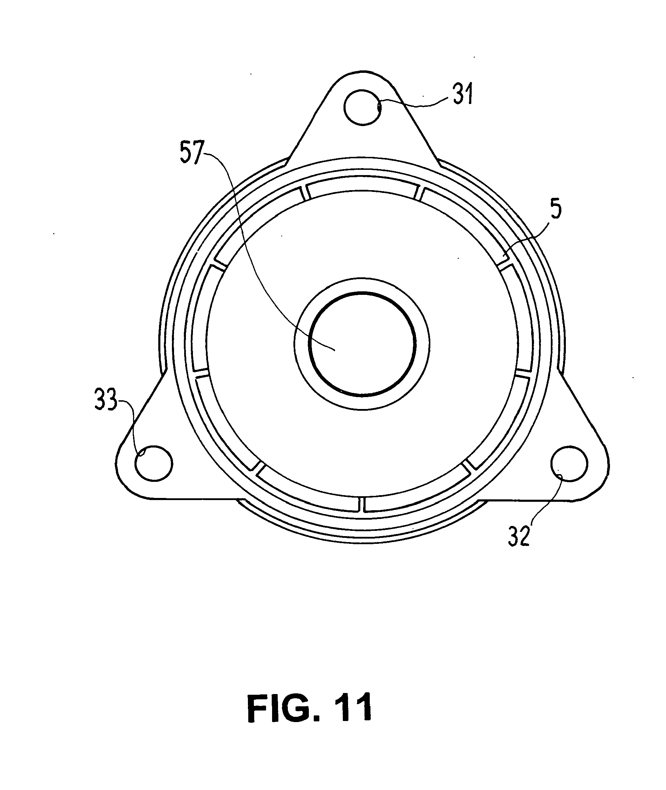

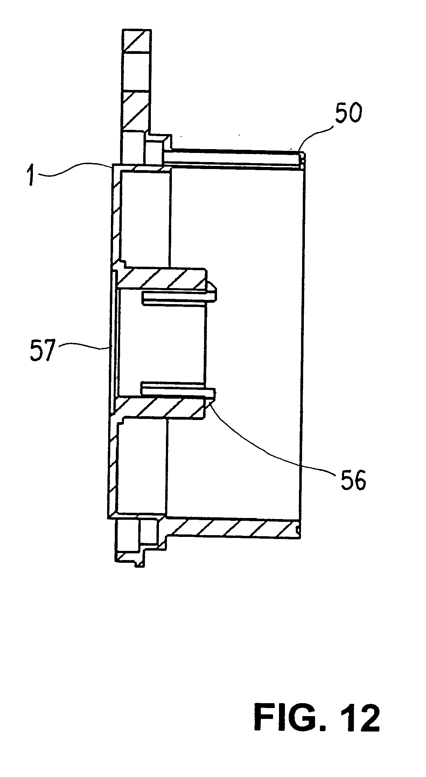

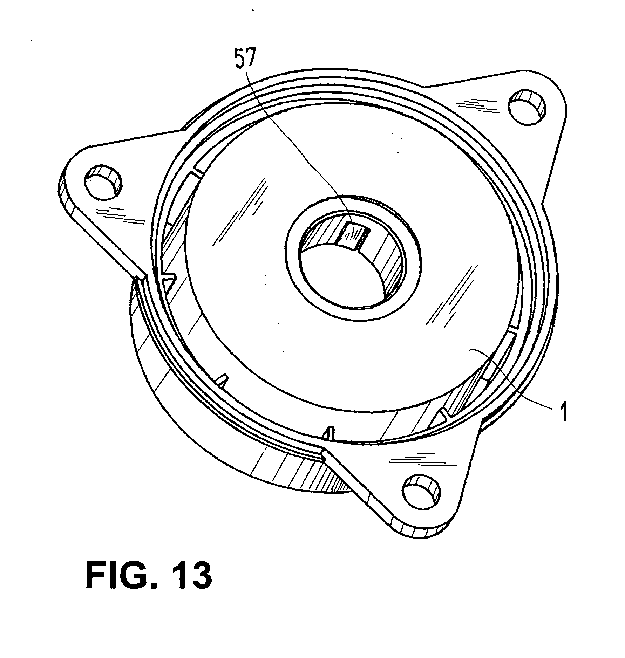

Der Stator 21 ist in seinen Einzelheiten in den Fig. 9 bis 14 gezeigt.

In den Stator 21 wird, wie in Fig. 2 zu sehen ist, der Flextopf 4 mit dem Hauptzahnrad 10 eingesetzt. In das Hauptzahnrad ist ein Wellenelement 20 eingebaut.

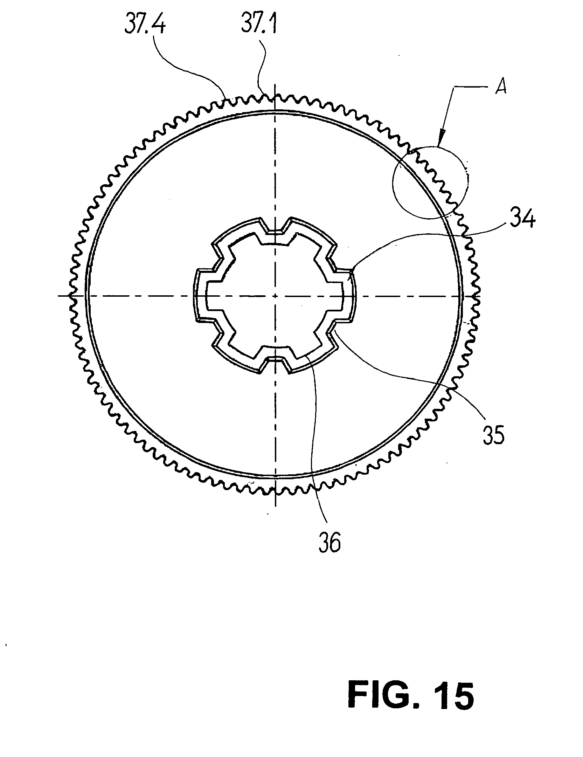

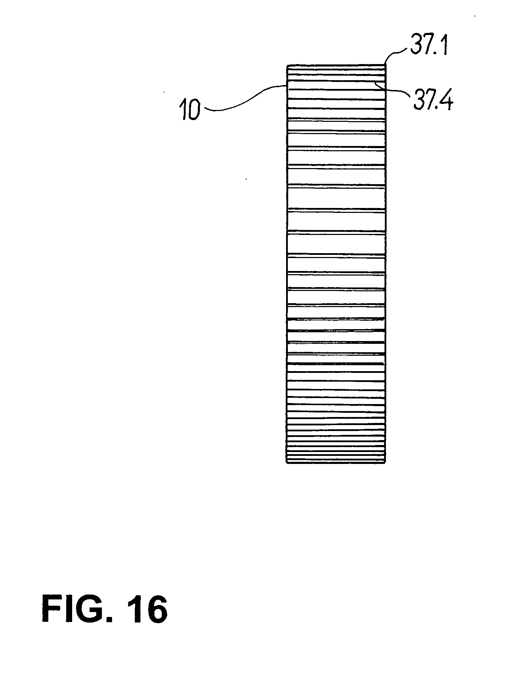

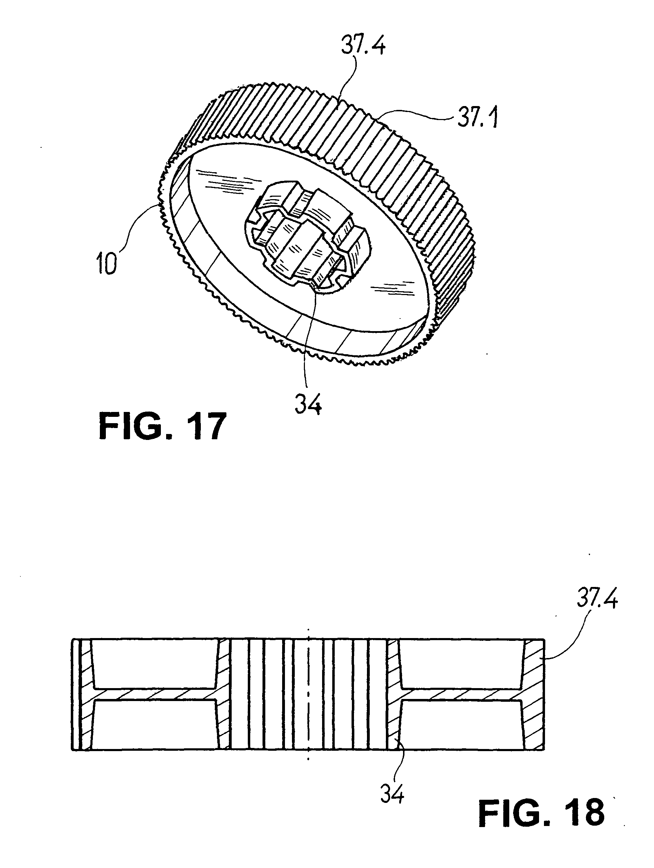

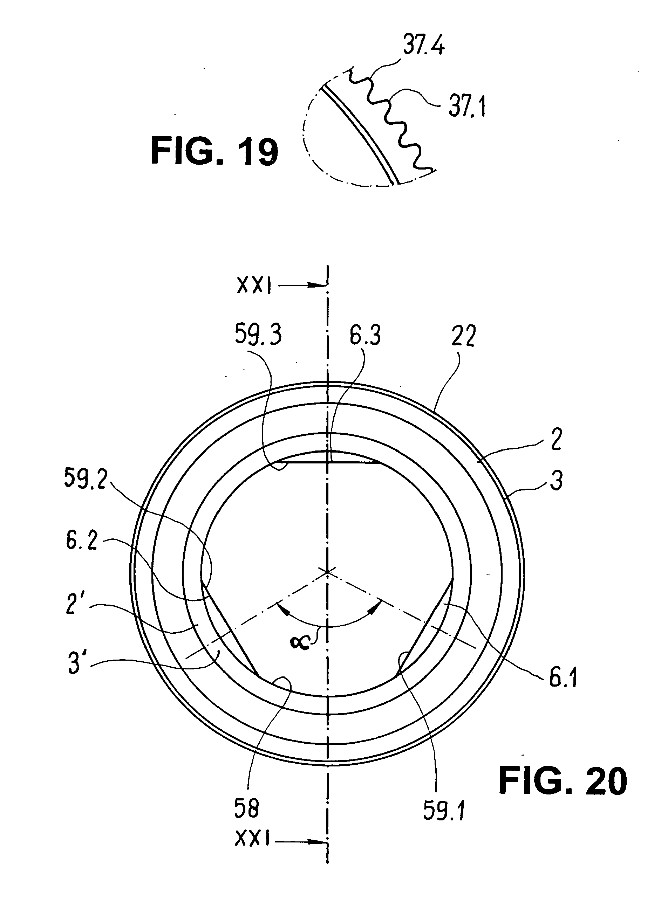

Das Hauptzahnrad 10 ist im Detail in den Fig. 15 bis 19 gezeigt. Das Hauptzahnrad 10 weist in seinem Zentrum auf einem Kreis nebeneinander liegende Rast- und Arretierausnehmungen 35, 36 auf. In diesen Rast- und Arretierausnehmungen 35, 36 lässt sich das Wellenelement 20 drehfest mit dem Hauptzahnrad 10 verbinden. An der Peripherie des Hauptzahnrads sind hier als Außenverzahnung 99 Zahnradzähne 37.1, ..., 37.n angebracht. Die Größe und die Ausgestaltung der Zahnradzähne sind im Detail in Fig. 15 und 19 gezeigt. Die Anzahl der Zähne und ihre Ausgestaltung sind natürlich entsprechend den jeweiligen Anwendungsbedingungen veränderbar.

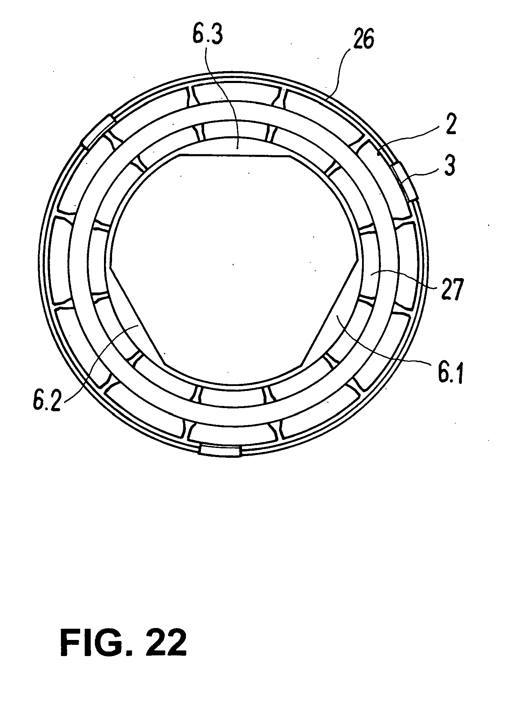

Der Rotor 22 ist im Detail darüber hinaus in den Fig. 20 bis 23 gezeigt. Wie die Fig. 1 bis 3 zeigen, weist der Rotor 22 zwei Magnetringe 3, 3' mit Magnetelementen 26, 27 auf. Die Magnetelemente 26, 27 sind Permanentmagnete.

Die Magnetringe 3, 3' werden beispielsweise aus folgenden Magnetmaterialien hergestellt und in einer Kunststoffmatrix eingeformt:

-     Neodym-Eisen-Bor       (NdFeB),
-     Samarium-Cobalt       (SmCo),
-     Strontium-Ferrit       (StFe),
-     Barium-Ferrit       (BaFe),
-     AlNiCo       (AlNiCo)

Die Magnetringe 3, 3', die aus einem dieser Materialien geformt werden, sind sehr hart und spröde, so dass deren Festigkeit darunter leidet. Deshalb wird um die Ringe 3, 3' jeweils ein weiterer Ring als ein Innenring 2' und ein Außenring 2 aus Kunststoff im Komponenten-Spritzgussverfahren geformt. Der Innen- und Außenring 2, 2' kann auch die Funktion des magnetischen Rück-

schlusses durch entsprechende Ausgestaltung überneh-men. Durch entsprechende Aufmagnetisierung der Magnetringe 3, 3' werden die Magnetelemente 26, 27 abwechselnd in Radialrichtung in N-S- bzw. S-N- Richtung aufmagnetisiert.

Die Magnetelemente 26, 27 können kunststoffgebundene Magnete oder metallische gesinterte Magnete sein

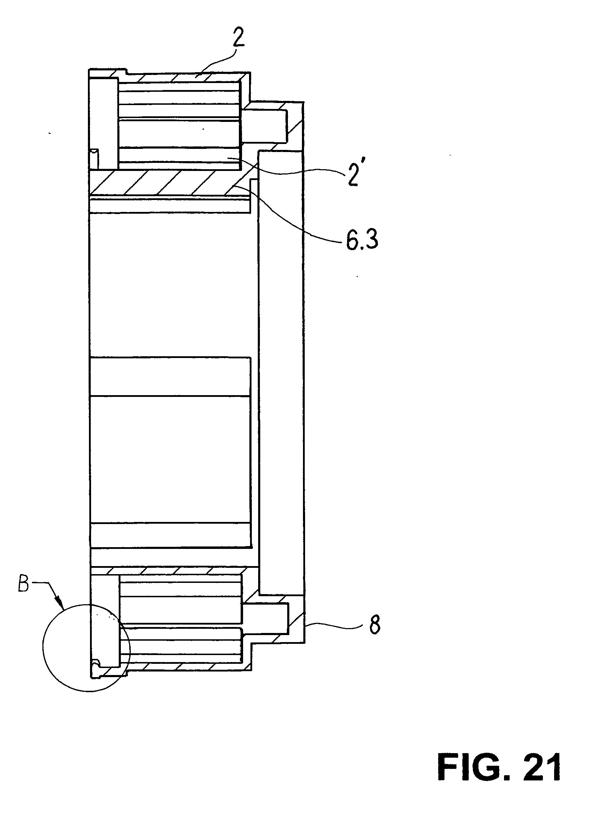

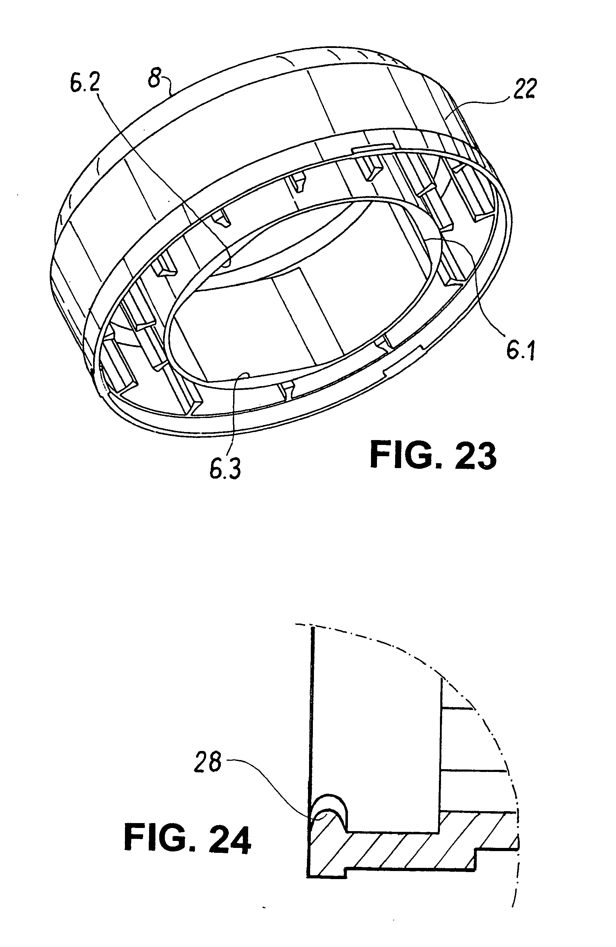

Nockenflachkörper 6.1, 6.2, 6.3 sind, wie insbesondere Fig. 20 zeigt, auf einem Innenringflächenelement 58 des Innenrings 2' in einem Winkel $\alpha$ von 120° um den Mittelpunkt angeordnet. In Fig. 21 und 23 sind die Nockenflachkörper deutlich erkennbar. Jeder Nockenflachkörper 6.1, 6.2, 6.3 weist ein Nockenflächenelement 59.1, 59.2, 59.3 auf.

Gemäß Fig. 20 und 23 ist jedes Nockenflächenelement 59.1, 59.2, 59.3 gerade ausgebildet. Das hat den Vorteil, dass die Verzahnung des Flextopfs 4 wie bei einer Zahnstange sehr unkompliziert angeführt werden kann.

Es ist auch möglich, jedes Nockenflächenelement abgerundet auszubilden. In diesem Fall kann ein Nockenkörperradius jedes Nockenflächenelements 59.1, 59.2, 59.3 der Nockenflachkörper 6.1, 6.2, 6.3 etwa drei- bis sechsmal größer als ein Innenringradius des Innenringes 2' ausgebildet werden. Das Verhältnis Innenringradius / Nockenkörperradius ist vorzugsweise etwa 2:9 also m etwa 1 zu 4,5.

Um den Rotor gut führen zu können, ist an ihm wenigstens ein Führungselement 28 vorgesehen.

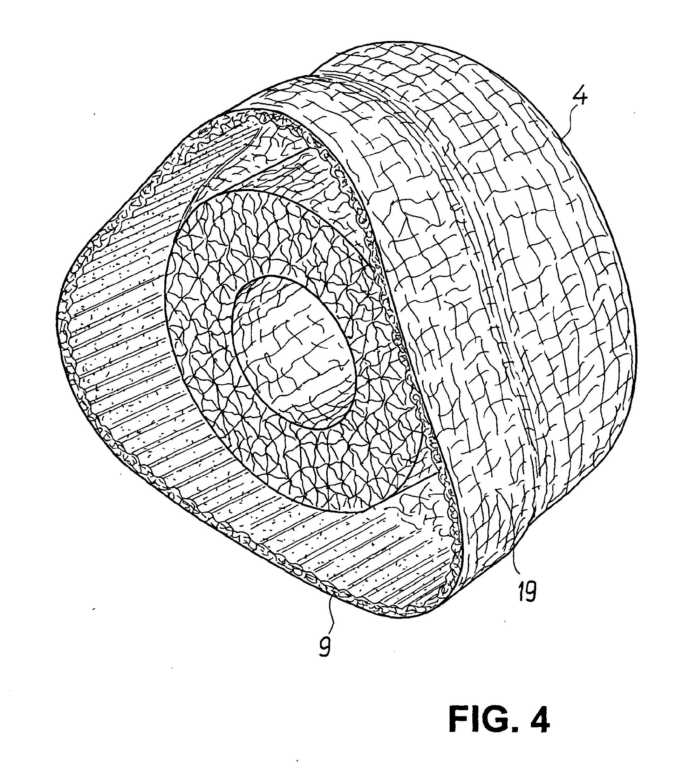

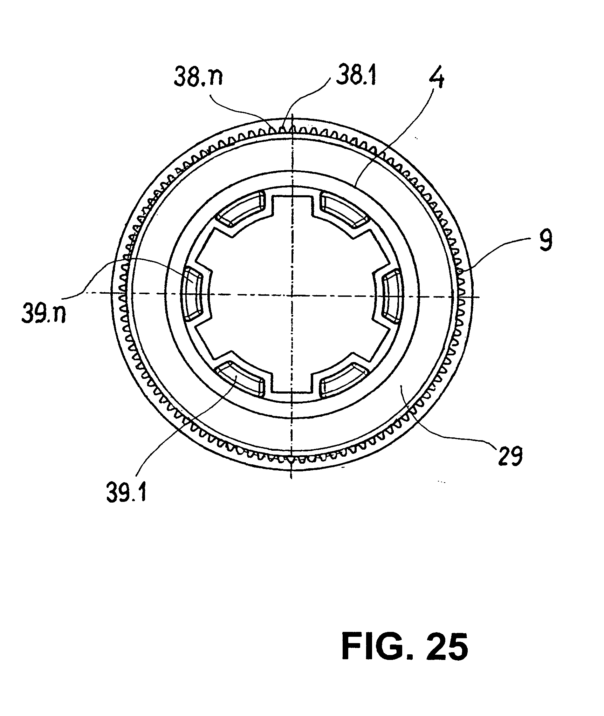

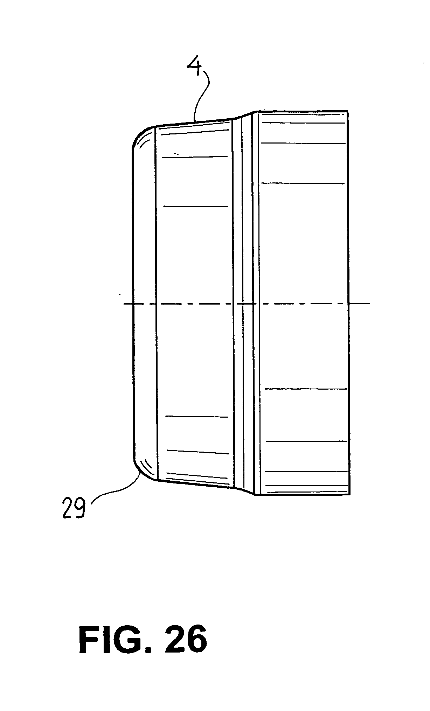

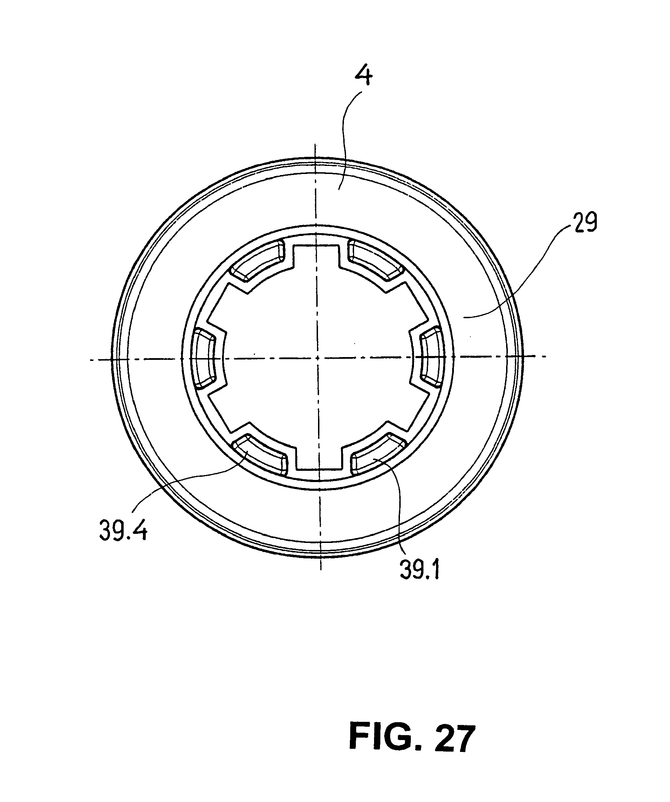

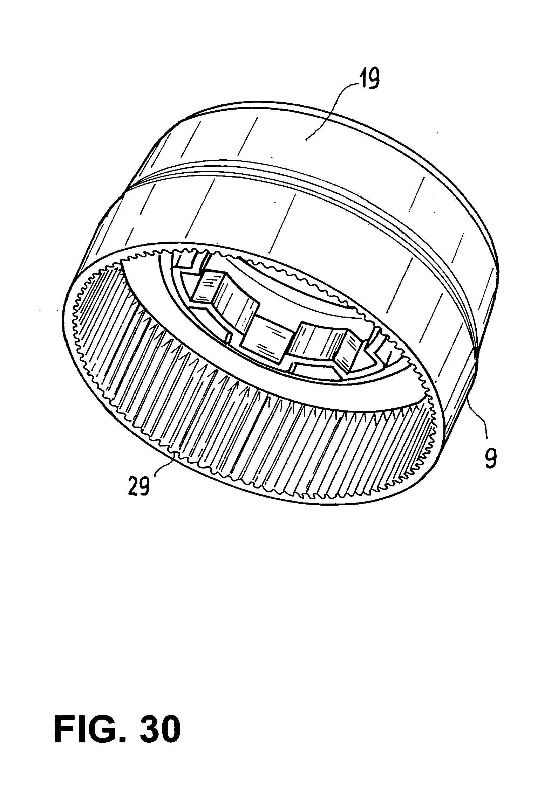

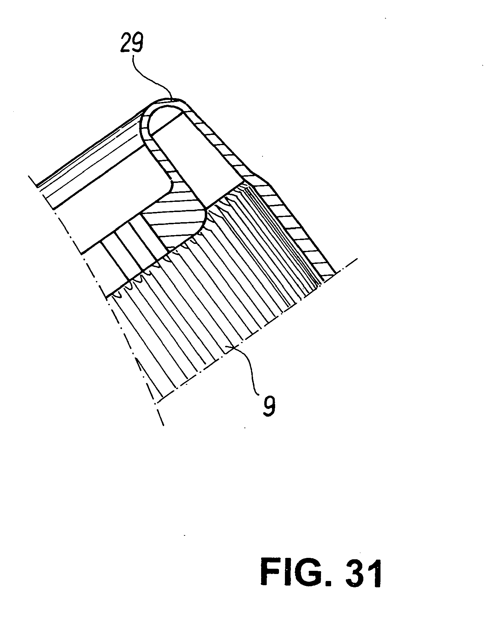

Der Flextopf 4 aus Fig. 4 ist im Detail in den Fig. 25 bis 31 gezeigt. An einen Gewölbekörper 29 schließt sich ein Walkriemen 9 an. Der Flextopf 4 kann einen Walkriemenkörper 7 aufweisen. Die Elastizität bzw. Flexibilität des Flextopfs 4 und insbesondere des Walkriemens 9 lassen sich durch die Wahl des Kunststoffs und/oder die Wanddicke beeinflussen.

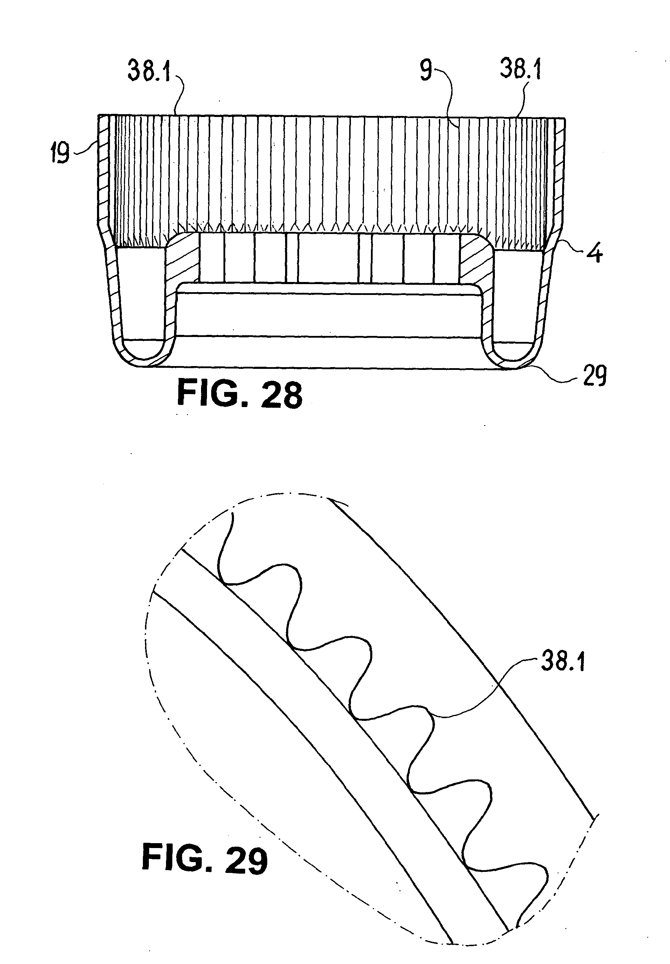

Wie insbesondere die Fig. 28, 30 und 31 zeigen, weist der Walkriemen 9 eine Innenverzahnung mit 102 Walkriemenzähnen 38.1, ..., 38.n auf, die einem Walkriemenflächenelement 19 gegenüber liegt. Die Verzahnung entspricht gemäß Fig. 29 der Hauptzahnradverzahnung gemäß Fig. 19. Wie auch der gesamte Flextopf 4 ist auch der Walkriemen 9 kreisrund. Im eingebauten Zustand hingegen nimmt insbesondere der Walkriemen 9, wie insbesondere Fig. 4 zeigt, durch die drei Nockenflachkörper 6.1, 6.2, 6.3 eine wankelkolbenähnliche Form an.

Wie insbesondere die Fig. 25, 27 und 30 zeigen, befinden sich im Inneren des Flextopfs Anlagekörper 39.1, ..., 39.n, die in das Lagerelement 54 eingreifen.

Die Montage und die Funktion des Kunststoff-Getriebe-Motors werden anhand der Fig. 1 bis 31 erläutert:

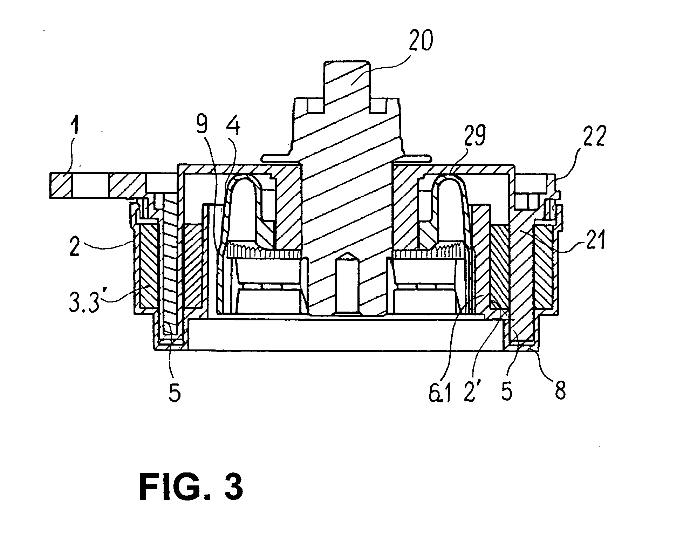

Auf den Stator 21 mit einem Spulenringkörper 25 mit eisenlosen Feldspulen wird, wie in Fig. 3 gezeigt, der Rotor 22 mit den zwei Magnetringen 3, 3', eingeformt in den Innen- und Außenring 2, 2', unter Belassung eines inneren und eines äußeren Luftspaltes gesetzt, sodass ein eisenloser Motor 18 vorliegt.

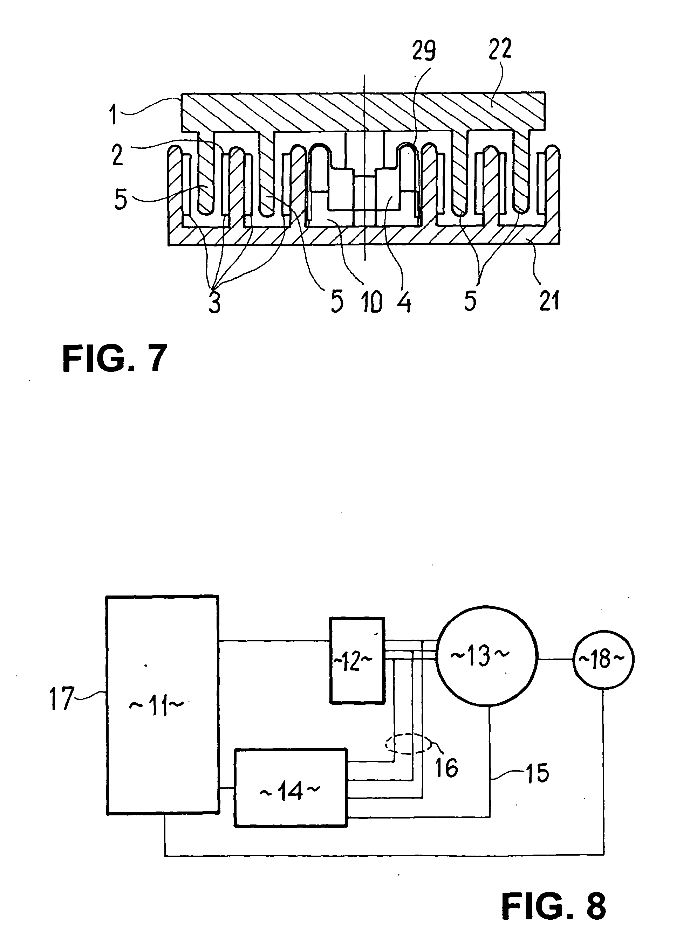

Selbstverständlich ist es auch möglich, wie Fig. 7 zeigt, den Motor zu vervielfachen und als Doppelmotor auszubilden, d. h. zwei Spulenringkörper 25, vier Magnetringe 3, 3'.

In den zusammengesetzten Motor 18 wird der Flextopf 4 in den Stator 21 eingesetzt. Hierbei verankern sich die Anlagekörper 39.1, ..., 39.n des Flextopfs 4 in den Rast- und Arretierkörpern 55 und 56 des Lagerelement 54 des Stators 21.

Der Flextopf 4 wird dabei so eingesetzt, dass der Walkriemen 9 im wesentlichen zwischen dem Hauptzahnrad 10 und insbesondere den drei Nockenflachkörpern 6.1, 6.2, 6.3 zu liegen kommt. Hierdurch verformt sich der Walkriemen so, dass er die bereits erwähnte und gezeigte wankelkolbenähnliche Form gemäß Fig. 4 erhält.

Während die Walkriemenzähnne 38.1, ..., 38.n auf den Zahnradzähnen 37.1, ..., 37.n zu liegen kommen, legt sich das Walkriemenflächenelement 19 an die drei Nockenflachkörper 6.1, 6.2, 6.3 und das Innenringflächenelement 58 an.

In den Zahnradbefestigungskörper 34 des Hauptzahnrads wird dann das Wellenelement 20 eingesetzt. Ist es erforderlich, kann der zusammengesetzte Kunststoff-Getriebe-Motor mit einem Abschlussscheibenelement gesichert werden. Der kommutatorlose Gleichstrommotor kann nun am Einsatzort an eine Spannungsquelle angeschlossen werden.

Um den Motor 18, bestehend aus dem beschriebenen Stator 21 und dem beschriebenen Rotor 22 mit der Getriebeeinheit 4, 10, präzise steuern zu können, ist eine SteuerVorrichtung vorgesehen, wie sie in Fig. 8 als Blockschaltbild dargestellt und aus der DE 20 2008 001 242.2 bekannt ist.

Hierbei ist eine Messeinheit 14 mit einem Rechner 11 verbunden. Der Rechner kann ein Mikrorechner sein. Mit dem Rechner 11 ist außerdem ein Leistungstreiber 12 verbunden. Leistungstreiber 12 und Messeinheit 14 sind an der U-, V- und W-Wicklung der Sternschaltung der eisenlosen Feldspulen 5 angeordnet. In gleicher Art und Weise sind die übrigen Spulen des Stators 21 in Stern geschaltet und mit dem Rechner verbunden. Außerdem liegen die Sternpunkte 15 ebenfalls an der Messeinheit 14. Um die Positioniergenauigkeit zu erhöhen, kann ein zusätzliches Messelement vorgesehen werden. Über eine Schnittstelle 17 wird die Steuerung des Motors 18 sicher gestellt.

Im Stillstand wird durch den Rechner 11 veranlasst, dass auf zwei Spulenelemente von den drei in Stern geschalteten Wicklungen ein Stromimpuls gegeben wird. Die Stromimpulse werden in einem Intervall von 0,1 bis 10,2 $\mu$s (Mikrosekunden) auf die Wicklungen gegeben werden.

Die in Stern geschalteten Wicklungen des Stators 21 verhalten sich wie ein Spannungsteiler. Die vorhandenen Analogvorgänge in den Spannungs- und Stromverläufen werden erfasst, wobei dem Sternpunkt 15 eine wichtige Bedeutung in der Verhältnismäßigkeit der Spulen untereinander zukommt. Durch Versuche werden so die einzelnen Positionen erfasst und im Rechner 11 abgelegt.

Beim Ansteuern des Motors 18 werden tatsächliche Werte gemessen. Die Berechnung der Position des Rotors wird aus dem Vergleich der gemessenen mit den abgespeicherten Werten aus dem Eichvorgang ermittelt. Die Sättigungsströme und ihr Verhältnis entspricht der Reluktanz (magnetischer Widerstand) der einzelnen Spulenelemente und zeigt die relative Position der Spulenelemente zu vorhandenen Magnetelementen 26, 27.

Die Stellung des Rotors 22 ist äußerst wichtig für ein problemloses Anfahren das Motors 18. Hervorzuheben ist, dass der Sternpunkt 15 zur Messung der Position verwendet wird. Damit ist gesichert, dass bereits beim Anlauf ein hohes Drehmoment vorhanden ist.

Die stromdurchflossenen Wicklungen erzeugen weiterhin beim Laufen des Rotors 22 unterschiedliche Spannungsabfälle je nach Position zu den Magnetelementen. Diese Signale werden durch den Rechner 11 ausgewertet und zur Stellungs-Optimierung genutzt.

Die Strom- und Spannungsvektoren können sich also im Rechner 11 optimieren. Ab einer bestimmten Drehzahl kann der dauermagnetisierte Rotor selbst als Stellungsgeber dienen.

Es ist natürlich möglich, den Motor 18 auch ohne SteuerVorrichtung zu betreiben.

Läuft der Kunststoff-Getriebe-Motor, dreht sich der Rotor 22 gegenüber dem Stator 21. Beim Drehen des Rotors 22 verschiebt sich sein Innenflächenelement 58 mit den drei Nockenflachkörpern 6.1, 6.2, 6.3 um den feststehenden Flextopf 4. Das Innenflächenelement 58 mit den drei Nockenflachkörpern 6.1, 6.2, 6.3 rutscht (vgl. insbesondere Fig. 6) über das Walkriemenflächenelement 19. Hierbei "walkt" der Rotor 22 den Walkriemen 9 an den Nockenflachkörpern 6.1, 6.2, 6.3 ab und drückt seine Zähne in die des Hauptzahnrads 10, das sich dadurch weiter schiebt. Der Walkriemen 9 des Flextops 4 wird dabei durch die Nockenflachkörper 6.1, 6.2, 6.3 verformt und nimmt die Rotationsbewegung des Rotors 22 auf und überträgt sie auf das Hauptzahnrad 10. Hierdurch wird eine Drehbewegung des Hauptzahnrads 10 erzeugt. Die gewählte Übersetzung durch die genannte Zahl der Zähne sorgt für die gewünschte Rotationsgeschwindigkeit des Hauptzahnrads 10. Das Hauptzahnrad 10 überträgt die Rotationsgeschwindigkeit auf das Wellenelement 20.

Hervorzuheben ist, dass der Flextopf 4 nicht nur eine etwas andere Getriebeeinheit realisiert, sondern darüber hinaus für einen Zusammenhalt des Kunststoff-Getriebe-Motors sorgt. Das mühsame Zusammensetzen sonst üblicher vieler Einzelteile entfällt.

Hervorzuheben ist darüber hinaus, dass der Kunststoff-Getriebe-Motor eisenlos und bis auf die eisenlosen Feldspulen nur aus Kunststoff ist.

**Patentansprüche**

1. Antriebsvorrichtung mit wenigstens

    - einem Stator (21) mit wenigstens einer eisenlosen Feldspule (5),
    - einem Rotor (22) mit wenigstens einem Magnetelement (26, 27) und
    - einer Getriebeeinheit (4, 9, 10, 19),

   **dadurch gekennzeichnet,**

    - **dass** die eisenlosen Spulen (5) des Stators (21) wenigstens teilweise in wenigstens einem Spulenringkörper (50) angeordnet sind,
    - **dass** die Magnetelemente (26, 27) des Rotors (22) wenigstens in einem Außenring (2) und einem dazu beabstandeten Innenring (2') angeordnet sind,
    - **dass** Innen- und der Außenring (2, 2') so gehalten sind, dass zwischen ihnen unter Belassung eines Luftspaltes der Spulenringkörper (50) des Stators (21) angeordnet ist,
    - **dass** auf einem Innenringflächenelement (58) des Innenringes (2') wenigstens ein Nockenflachkörper (6.1, 6.2, 6.3) mit einem Nockenflächenelement (59.1, 59.2, 59.3) angeordnet ist,
    - **dass** ein Flextopf (4) mit einem Walkriemen (9) mit Walkriemenzähnen (38.1, ..., 38.n), in dem ein Hauptzahnrad (10) mit Zahnradzähnen (37.1, ..., 37.n) angeordnet ist, als Getriebeeinheit vorgesehen ist,
    - **dass** der Flextopf (4) so in den Innenring (2') des Rotors (22) und in den Stator (21) eingesetzt ist, dass der Walkriemen (9) mit den Walkriemenzähnen (38.1, ..., 38.n) auf den Zahnradzähnen (37.1, ..., 37.n) des Hauptzahnrads (10) angeordnet ist und mit seinem Walkriemenflächenelement (19) wenigstens teilweise auf dem Nockenflachkörper (6.1, 6.2, 6.3) aufliegt.

2. Vorrichtung nach Anspruch 1, dass wenigstens ein Spulenringkörper (50) mit einer Grundplatte (1) verbunden ist.

3. Vorrichtung nach Anspruch 1 oder 2, **dadurch gekennzeichnet, dass** die eisenlosen Feldspulen (5) in den Spulenringkörper (50) eingespritzt sind.

4. Vorrichtung nach einem der Ansprüche 1 bis 3, **dadurch gekennzeichnet, dass** die eisenlosen Feldspulen (5) Wicklungen (53) aufweisen, die gewickelt, gestanzt, gebogen oder dgl. hergestellt sind.

5. Vorrichtung nach einem der Ansprüche 1 bis 4, **dadurch gekennzeichnet, dass** mit dem Spulenringkörper (50) eine Grundplatte (1) geformt ist, die ein Lagerelement (54) mit einer Verbindungseinheit (55, 56) aufweist.

6. Vorrichtung nach Anspruch 5, **dadurch gekennzeichnet, dass** in das Lagerelement (54) der Flextopf (4) eingesetzt ist.

7. Vorrichtung nach einem der vorhergehenden Ansprüche, **dadurch gekennzeichnet, dass** die Magnetelemente (26, 27) als Magnetring (3, 3') aus magnetisierbaren Materialien geformt und abwechselnd Süd-Nord- und Nord-Süd-gepolt radial aufmagnetisiert sind.

8. Vorrichtung nach einem der vorhergehenden Ansprüche, **dadurch gekennzeichnet, dass** der Nockenflachkörper (6.1, 6.2, 6.3) ein wenigstens teilweise gebogenes Nockenflächenelement (59.1, 59.2, 59.3) aufweist.

9. Vorrichtung nach einem der vorhergehenden Ansprüche, **dadurch gekennzeichnet, dass** auf dem Innenringflächenelement (58) des Innenrings (2' ) wenigstens drei Nockenflachkörper (6.1, 6.2, 6.3) angeordnet sind.

10. Vorrichtung nach einem der vorhergehenden Ansprüche, **dadurch gekennzeichnet, dass** die Nockenflachkörper (6.1, 6.2, 6.3) auf dem Innenringflächenelement (58) des Innenrings (2') gleichmäßig verteilt angeordnet sind.

11. Vorrichtung nach einem der vorhergehenden Ansprüche, **dadurch gekennzeichnet,**

  - **dass** die Walkriemenzähne (38.1, ..., 38.n) des Flextopfs (23) als Innenverzahnung ausgebildet sind und
  - **dass** die Zahnradzähne (37.1, ..., 37.n) des Hauptzahnrads (10) als Außenverzahnung ausgebildet sind.

12. Vorrichtung nach einem der vorhergehenden Ansprüche, **dadurch gekennzeichnet, dass** Spannungsabfälle der eisenlosen Feldspulen (5), je nach Position der Magnetelemente (26, 27) als Positionssignal ausgewertet sind.

13. Vorrichtung nach einem der vorhergehenden Ansprüche, **dadurch gekennzeichnet,**

  - **dass** der Stator (21) aus zwei Spulenringkörper (50) mit eisenlosen Feldspulen (5) besteht und
  - **dass** am Rotor zwei der Innen- und der Außenringe (2, 2' ) so gehalten sind, dass zwischen ihnen unter Belassung innerer und äußerer Luftspalte die Spulenringkörper (50) des Stators (21) angeordnet sind.

14. Verfahren zur Herstellung einer Antriebsvorrichtung mit wenigstens

  - - einem Stator (21) mit wenigstens einer eisenlosen Feldspule (5),
  - - einem Rotor (22) mit wenigstens einem Magnetelement (26, 27) und
  - - einer Getriebeeinheit (9, 19, 23),

  **gekennzeichnet durch** folgende Schritte

  A) Formen des Stators (21) mit wenigstens einem Spulenringkörper (50), in den eisenlose Feldspulen (5) eingespritzt werden;
  B) Formen des Rotors (22) mit zwei Magnetringen (3, 3'), die jeweils von einem Innen- und von einem Außenring (2, 2') umspritzt werden, wobei an ein Innenringflächenelement (58) des Innenrings (2') bei dessen Formung gleichmäßig über dessen Umfang versetzte Nockenflachkörper (6.1, 6.2, 6.3) mit geformt werden;
  C) Formen eines Flextopfs (4) mit einem Walkriemen (9) mit einer Innenverzahnung;
  D) Formen eines Hauptzahnrads (10) mit einer Außenverzahnung;
  E) Aufsetzen des Rotors (22) auf den Stator (21);
  F) Einsetzen des Flextopfs (4) in den Rotor (22) und den Stator (21) derart, dass der Walkriemen (9) zwischen das eingesetzte Hauptzahnrad (10) und wenigstens die Nockenflächenelemente (6.1, 6.2, 6.3) geschoben wird.

15. Verfahren nach Anspruch 14, **dadurch gekennzeichnet, dass** die Magnetringe (3, 3' ) im Zwei-Komponenten-Spritzverfahren in den Innen- und den Außenring (2, 2') gespritzt werden.

16. Verfahren nach Anspruch 14 oder 15, **dadurch gekennzeichnet, dass** die magnetisierbaren Stoffe der Magnetringe (3, 3') zu Magnetelementen (26, 27) aufmagnetisiert werden.

17. Verfahren nach einem der Ansprüche 14 bis 16, **dadurch gekennzeichnet, dass** in das Hauptzahnrad (10) ein Wellenelement (20) eingesetzt wird.

**FIG. 1**

**FIG. 2**

FIG. 3

FIG. 4

**FIG. 5**

**FIG. 6**

FIG. 7

FIG. 8

**FIG. 9**

**FIG. 10**

**FIG. 11**

**FIG. 12**

**FIG. 13**

**FIG. 14**

**FIG. 15**

**FIG. 16**

FIG. 17

FIG. 18

**FIG. 19**

37.4

37.1

**FIG. 20**

XXI

59.3    6.3    22

2

3

59.2

6.2

2'

3'

α

6.1

58

XXI

59.1

**FIG. 21**

6.3    26

2

3

27

6.1

6.2

**FIG. 22**

**FIG. 23**

**FIG. 24**

38.n       38.1       4

9

39.n

39.1

29

**FIG. 25**

**FIG. 26**

**FIG. 27**

FIG. 28

FIG. 29

FIG. 30

FIG. 31

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1403155 A2
- EP 1772948 A2
- DE 102005048569 A1
- DE 102005048570 A1
- DE 102004009128 A1
- EP 1895640 A2
- EP 1895644 A2
- WO 2008092630 A2
- DE 202008001242